# EUROPÄISCHE PATENTSCHRIFT

(11) **EP 0 611 445 B1**
(45) Veröffentlichungstag und Bekanntmachung des Hinweises auf die Patenterteilung: **12.04.2000**
(21) Anmeldenummer: 93919178.9
(22) Anmeldetag: 26.08.1993
(51) Int. Cl.: G01N 1/28, F17C 3/08, F25D 3/10

(54) **VERFAHREN UND VORRICHTUNG ZUR VORBEREITUNG MIKROSKOPISCHER, INSBESONDERE ELEKTRONENMIKROSKOPISCHER PRÄPARATE FÜR DIE SCHNITTPRÄPARATION**
PROCESS AND DEVICE FOR MAKING MICROSCOPE, ESPECIALLY ELECTRON-MICROSCOPE, PREPARATIONS FOR PREPARING SECTIONS
PROCEDE ET DISPOSITIF POUR L'OBTENTION DE PREPARATIONS MICROSCOPIQUES, NOTAMMENT POUR MICROSCOPE ELECTRONIQUE, DESTINEES A LA PREPARATION DE COUPES

(30) Priorität: 08.09.1992 AT 178692
(43) Veröffentlichungstag der Anmeldung: 24.08.1994
(73) Patentinhaber: LEICA AG, A-1170 Wien (AT)
(72) Erfinder: SITTE, Hellmuth, A-6100 Seefeld in Tirol (AT); EDELMANN, Ludwig, D-66424 Homburg-Saar (DE)
(74) Vertreter: Stamer, Harald, Dipl.-Phys.
(86) Internationale Anmeldenummer: EP9302296
(87) Internationale Veröffentlichungsnummer: WO9405994

(56) Entgegenhaltungen:
- EP-A- 0 136 014
- DE-A- 3 042 578
- GIT LABOR-MEDIZIN Nr. 5 , 1987 , DARMSTADT Seiten 199 - 208 H.SITTE ET AL. 'EIN INSTRUMENT ZUR KRYOSUBSTITUTION'

## Beschreibung

Die Erfindung betrifft ein Verfahren und eine Vorrichtung zur Inkubation von Proben in Flüssigkeiten, insbesondere für eine nachfolgende Polymerisations-Einbettung in Kapseln. Die Polymerisations-Einbettung, die vorzugsweise bei Temperaturen zwischen -120°C und +80°C durchgeführt wird, dient zur Vorbereitung der Proben für eine nachfolgende Schnittpräparation für mikroskopische, insbesondere elektronenmikroskopische und histochemische Untersuchungen.

Alternativ zur heute üblichen Standardmethodik (chemische Fixation in gepufferten Aldehyd- und/oder Osmiumtetroxid-Lösungen - Entwässerung in polaren organischen Medien - Inkubation in Monomer - Polymerisations-Einbettung in Kunstharz; vgl. H.Sitte, mta-Extra Nr. 10, Umschau-Verlag Breidenstein GmbH, Frankfurt-Main, 1985) werden biologische Proben in zunehmendem Umfang extrem rasch eingefroren ("Kryofixation"). Anschließend wird das in den Proben enthaltene Eis bei Temperaturen zwischen etwa -80°C und -120°C durch Inkubation der gefrorenen Proben in polaren organischen Flüssigkeiten (z.B. Methanol oder Azeton) ausgelöst und gegen diese Medien ausgetauscht ("Kryosubstitution: vgl. hierzu u.a. Patentschriften DE 29 44464 C2 oder DE 34 25744 C2, bzw. H. Sitte, Zeiss, MEM 3, 25 - 31, 1984 oder H. Sitte et al., GIT Labor-Medizin 10, 199 - 208, 1987 oder H. Sitte et al. in A.J.Verkleij und J.L.M.Leunissen als Herausgeber von "Immuno-Gold Labeling in Cell Biology, Sn. 64 - 93, insbesondere Chapter III "Rapid Freezing, Freeze-Substitution and Resin Embedding", CRC-Press, Boca Raton, Florida, USA, 1989; dortselbst weiterführende Literaturhinweise) sowie schließlich nach einer Monomer-Inkubation eine durch UV-Strahlung ausgelöste Polymerisations-Einbettung bei tiefer Temperatur durchgeführt. Die alternative "PLT-Methode" (PLT steht für "Progressive Lowering of Temperature; vgl. hiezu wie zur Tieftemperatur-Einbettung u.A. E. Carlemalm et al., J. Microscopy, Oxford 126, 123 - 143, 1982 sowie B. Hurnbel und M. Müller in M. Müller et al., Herausgeber von "The Science of Biological Specimen Preparation", SEM Inc., Chicago, Sn. 175 - 183, 1986; dortselbst weitere Literaturhinweise) geht von einer schwachen chemischen Fixation der Proben (z.B. in gepuffertem Aldehyd) aus und senkt die Temperatur der Proben bei stetig steigender Konzentration der zugesetzten polaren Medien (z.B. Methanol) kontinuierlich in jenem Umfang ab, der dem Gefrierpunkt der jeweiligen Mischung entspricht. Auch dieses Verfahren schließt mit einer Tieftemperatur-Einbettung durch UV ab. Diese Einbettung wird nach dem Stand der Technik in der Regel dadurch vollzogen, daß man die weitgehend entwässerten Proben stufenweise in einen Monomer-Ansatz überführt und daran anschließend bei Temperaturen zwischen -30°C und -70°C durch UV-Strahlung polymerisiert.

Sowohl die Präparationsgänge nach der Standard-Methode, als auch die angeführten Verfahren bei reduzierter Temperatur bedingen ein mehrfaches Wechseln der Entwässerungs- bzw. Substitutions-Medien sowie ein stufenweises Überführen in den reinen Monomer-Ansatz, das bei der für Arbeiten bei reduzierten Temperaturen üblichen Verwendung von Eppendorf-Röhrchen für jedes Präparat individuell vollzogen werden muß und bei orößeren Probenmengen äußerst zeitintensiv ist. Besonders störend ist, daß alle einzelnen Behälter vor der UV-Polymerisation bei reduzierter Temperatur einzeln gasdicht verschlossen werden müssen, da sonst einzelne Komponenten verdampfen und eine einwandfreie Aushärtung des Kunstharzes nicht mehr möglich ist. Weitere Probleme treten dadurch auf, daß zahlreiche Fixations-Lösungen und Substitutionsmedien starke Gifte mit höherem Dampfdruck (z.B. das flüchtige 0s04) und die üblichen Monomer-Ansätze starke Allergene enthalten, so daß sowohl ein Einatmen der Dämpfe, als auch ein Hautkontakt schwere Erkrankungen auslösen können.

Eine automatische Inkubations einrichtung zur Fixation, Entwässerung und Einbettung biologischer Objekte ist aus der DE-A-3042578 bekannt.

Aufgabe der vorliegenden Erfindung ist es, die Kapseleinbettung nach der Standardmethode, insbesondere aber auch bei reduzierter Temperatur zu vereinfachen und damit sowohl Zeit einzusparen als die Gefahr von Hautkontakten mit Allergenen sowie Inhalationen von flüchtigen Giftstoffen zu minimieren. Dies gilt insbesondere für die synchrone Präparation mehrerer unterschiedlicher Proben. Eine Lösung wird erfindungsgemäß erreicht durch ein Verfahren gemäß Anspruch 1 und eine Vorrichtung gemäß Anspruch 10.

Die Öffnung bzw. Öffnungen in den Lochkapseln (vorzugsweise handelt es sich um einen Kranz von Öffnungen) weisen also jeweils einen Durchmesser auf, der den Eintritt und Austritt von Flüssigkeiten zuläßt, durch seine Abmessung aber einen Austritt und damit einen Verlust von Objekten ausschließt. Im einfachsten Fall werden diese Lochkapseln mit einer Pinzette sukzessive in die verschiedenen Medien eingebracht, welche sich in Flaschen oder kleinen Behältern befinden. Sie füllen sich hierbei beim Eintauchen von unten durch die Öffnung(en) mit dem Medium, das nach dem Anheben wieder abfließt. Im letzten Schritt wird die Lochkapsel mit einem polymerisationsfähigen Monomer-Ansatz gefüllt. Um ein Ausfließen dieses Monomers zu verhindern, wird die Lochkapsel später in eine zumindest teilweise mit Monomer gefüllte "Hüllkapsel" eingeführt, deren innerer Durchmesser nur geringfügig größer ist als der Außendurchmesser der Lochkapsel. Das Monomer füllt nun den Spalt zwischen der Lochkapsel und der Hüllkapsel aus und kann danach in bekannter Weise durch Wärme oder UV-Strahlung polymerisiert werden, wobei für die UV-Polymerisation Kapseln aus UV-durchlässigen Materialien, insbesondere Polyethylen, Polypropylen, Azetalharz oder Gelatine vorgesehen sind.

An sich kann zur Durchführung des erfindungsgemäßen Verfahrens ein handelsübliches Werkzeug bekannter Art (z.B. - wie bereits erwähnt - eine Pinzette) verwendet werden. Gemäß Anspruch 10 jedoch wird ein spezielles Aufnahmeteil zum Halten der Proben, nämlich ein Stempel, sowie eine Halterung für diesen Stempel, z.B. ein hülsenförmiger Träger, verwendet wird. Es ist auf diese Art beispielsweise risikofrei möglich, eine Reihe kleiner Reagenzgläser mit den verschiedenen Medien zu füllen und die Probe in der Lochkapsel jeweils für eine bestimmte Zeit in ein derartiges Gefäß zu stellen und danach das aus dem Halter, dem Stempel und der in der Lochkapsel befindlichen Probe bestehende System anzuheben und nach Auslaufen des ersten Mediums in das nächste zu übertragen. Eine vorteilhafte Ausgestaltung der Vorrichtung zur Durchführung des Verfahrens kann vorsehen, daß sich an einem Träger mehrere Lochkapseln an mehreren Stempeln befinden, so daß synchron eine praktisch beliebige Anzahl von Proben und Lochkapseln von einem Medium in das nächstfolgende übertragen werden können.

Eine weitere Ausgestaltung der Vorrichtung zur Durchführung des erfindungsgemäßen Verfahrens kann vorsehen, daß sich zumindest zwei Lochkapseln in einem Behälter in einer bestimmten geometrischen Anordnung befinden. Alle im Behälter befindlichen Lochkapseln werden nach Einfüllen des Entwässerungs- bzw. Substitutionsmediums in eine zentrale Öffnung des Behälters in einem einzigen Arbeitsschritt durch Einbringen eines Verdrängungskörpers durch die Perforationen der Lochkapseln gefüllt. Eine Konvektion dieses Mediums wird auf einfache Weise durch Anheben und neuerliches Absenken dieses Verdrängungskörpers synchron für alle Proben erreicht. Medienwechsel werden ebenfalls synchron für alle Präparate durch ein Absaugen des alten Mediums durch einen im Verdrängungskörper vorgesehenen Kanal vollzogen, durch den auch das neue Medium eingefüllt wird. Nach der abgeschlossenen Monomer-Inkubation werden die mit Monomer gefüllten Lochkapseln wiederum in einem Arbeitsgang in der bereits beschriebenen Weise auf Stempel aufgesteckt, die sich auf einem Träger in der gleichen geometrischen Anordnung befinden, wie die Lochkapseln in dem beschriebenen Behälter. Die Perforationen der Lochkapseln werden anschließend wiederum dadurch in einem einzigen Arbeitsschritt verschlossen, daß man sie in die bereits erwähnten Hüllkapseln mit einem etwas größeren Durchmesser einsteckt, die vorher ebenfalls zumindest teilweise mit Monomer-Ansatz gefüllt wurden, wobei diese Hüllkapseln in einem weiteren Behälter in gleicher geometrischer Weise angeordnet sind, wie die Stempel am Träger bzw. die Lochkapseln im vorangehend beschriebenen Behälter. Die Monomergefüllten Hüllkapseln werden beispielsweise auf eine zweite Stufe eines gestuften Stempels aufgesteckt und haften auf dieser Stufe ebenso wie die Lochkapseln auf einer unteren Stufe des gestuften Stempels in einem strengen Schiebesitz. Der Abstand der äußeren Oberfläche der Lochkapseln von der inneren Oberfläche der Hüllkapseln beträgt im Hinblick auf die nachfolgende Schnittpräparation (vgl. hierzu H.Sitte, 1985, l.c.) etwa 0,5 bis maximal 2 mm. Nach dem Aufstecken der Hüllkapseln werden alle Kapseln gemeinsam mit dem Träger mit einem Manipulator zur Wärmepolymerisation in einen Thermostaten oder zur Tieftemperatur-Einbettung in einen Topf überführt, der etwa bis zum unteren Rand des Stempels mit Flüssigkeit gefüllt wird (z.B. Alkohol), welche die Abführung der bei der exothermen Polymerisations-Reaktion anfallenden Wärme beschleunigt. Für die Operation im Kaltraum ist der mehrfach erwähnte Manipulator mit einem Wärme-isolierenden Handgriff ausgestattet.

Eine weitere vorteilhafte Ausgestaltung des erfindungsgemäßen Verfahrens und der zum Durchführen dieses Verfahrensablaufes ausgebildeten Vorrichtung kann darin bestehen, daß zumindest ein Teil dieser Operationen durch eine automatische Einrichtung ohne Zutun des Benutzers vollzogen wird. So können beispielsweise die Lochkapseln im beschriebenen Behälter manuell gefüllt werden, die Lochkapseln mit den Präparaten aber anschließend in einen "Tissue-Processor" (Einbettungs-Automaten) eingebracht werden, der beispielsweise in der Art eines "Karussell- bzw. Trommel-Systemes" (vgl. hierzu H.Sitte und K. Neumann in G.Schimmel und W.Vogell, Herausgeber der "Methodensammlung der Elektronenmikroskopie", Wissenschaftliche Verlags-GmbH, Stuttgart, Lieferung 11, 1983, insbesondere Sn. 184-191 sowie Abbn. 100a und 101) die Kapseln jeweils sukzessive in einen Behälter mit einem Medium absenkt, bedarfsweise durch mehrmaliges Anheben und Absenken eine Konvektion erzeugt, die aufgebaute Gradienten abbaut, anschließend anhebt und nach Abtropfen des ersten Mediums die Lochkapseln mit den Proben auf dem Träger in das nächste mit einem anderen Medium gefüllte Gefäß überführt. Nach Abschluß der Monomer-Imprägnation können alle Lochkapseln gemeinsam automatisch oder manuell in der bereits beschriebenen Weise in die Hüllkapseln eingesteckt und der Polymerisation zugeführt werden. Diese Operation kann ohne eine besondere Übung mit minimalem Zeitaufwand und ohne das Risiko eines Hautkontaktes mit Allergenen oder einer Inhalation giftiger Gase vollzogen werden.

Das erfindungsgemäße Verfahren bzw. die zu seinen Durchführungen dienenden Vorrichtung werden nachfolgend an Hand der grob schematischen Zeichnungen durch Ausführungsbeispiele näher erläutert.

In den Zeichnungen zeigen:
Fig. 1a eine einzelne Lochkapsel mit einem Präparat an einem gestuften Stempel, der sich auf einem Manipulator mit Handgriff befindet, wobei die Lochkapsel in ein Medium eingetaucht und mit diesem gefüllt ist, das sich in einem Behälter befindet, im schematischen Querschnitt,
Fig. 1b eine Lochkapsel und eine Hüllkapsel für das System nach Fig. 1a im schematischen Querschnitt mit den Maßangaben für den Durchmesser und die Wandstärke der Kapsel sowie des Spaltraumes, der zwischen beiden Kapseln beim Aufstecken auf den gestuften Stempel nach Fig. 1a entsteht,
Fig. 1c zwei Lochkapseln mit Bördelrand auf einfachen Stempeln an einem perforierten Träger, der sich auf einem Manipulator befindet, wobei auf dem Bördelrand der Lochkapseln die Hüllkapseln aufgesteckt und die Lochkapseln mit Präparaten beschickt und beide Kapseln mit Monomer-Ansatz gefüllt sind, im schematischen Querschnitt, sowie
Fig. 2a einen Behälter mit zwei Öffnungen zur Aufnahme von Lochkapseln in schematischer Aufsicht (weitere Öffnungen strichliert angedeutet),
Fig. 2b den Behälter nach Fig. 2a mit eingesteckten Lochkapseln sowie einem eingesetzten Verdrängungskörper in einem schematischen Querschnitt,
Fig. 2c einen Behälter zur Aufnahme von Hüllkapseln mit eingesetzten Hüllkapseln im schematischen Querschnitt, sowie schließlich
Fig. 2d einen perforierten Träger mit zwei beschickten Doppelkapseln auf einem Ständer in einem flüssigkeitsgefüllten Topf zur UV-Polymerisation, wobei die Doppelkapseln die Präparate und den Monomer-Ansatz enthalten.

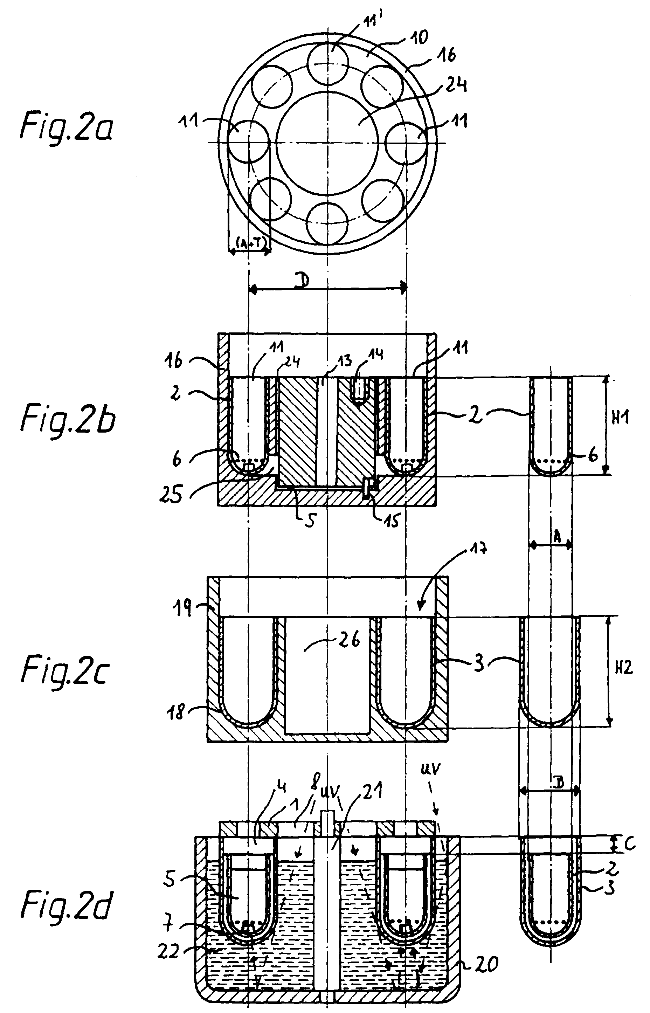

Alle Einzeldarstellungen der Fig. 2 korrespondieren hinsichtlich der Abmessungen, insbesondere hinsichtlich des Abstandes D der Öffnungen für die Lochkapseln und Hüllkapseln in den Behältern sowie der Stempel am Träger, welche zur Aufnahme der Loch- und Hüllkapseln dienen.

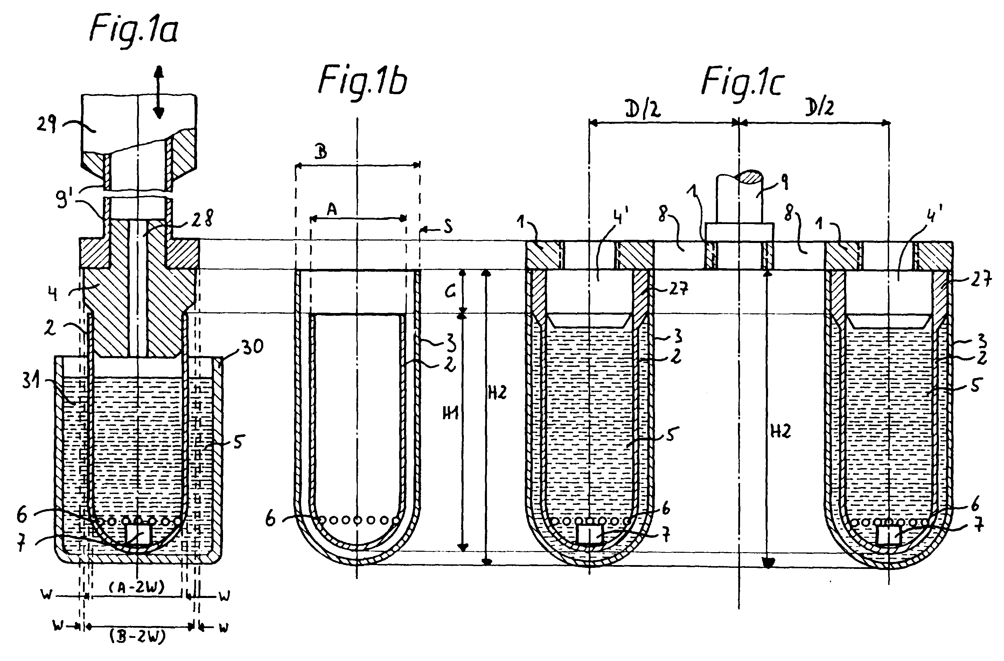

Fig. 1a zeigt eine einfache Ausführungsform einer Vorrichtung zur Durchführung des erfindungsgemäßen Verfahrens, wobei eine vorzugsweise zylindrische Lochkapsel 2 mit dem Außendurchmesser A und einer Wandstärke W auf der unteren Stufe eines gestuften Stempels 4 mit einem Durchmesser (A-2W) im strengen Schiebesitz aufgesteckt ist und der gestufte Stempel 4 eine zweite Stufe mit einem Durchmesser (B-2W) aufweist, die zum späteren Aufstecken einer Hüllkapsel 3 dient. Der gestufte Stempel 4 weist zur Be- und Entlüftung eine zentrale Bohrung 28 auf und ist an einem einfachen Manipulator 9' (z.B.Hülse) mit einem Handgriff 29 befestigt. Die Lochkapsel 2 weist in ihrem unteren Drittel zumindest eine Öffnung, im dargestellten Fall einen Kranz von Öffnungen 6 auf, deren Durchmesser deutlich geringer ist als der Durchmesser der Probe 7. Das System 2,4,7,9',29 kann in einen Behälter 30 und das in ihm befindliche Medium 31 (z.B. Aldehydlösung zur chemischen Fixierung der Probe 7) eingetaucht werden, wobei sich die Kapsel 2 durch die Öffnungen 6 von unten mit dem Medium 31 füllt und die in der Kapsel 2 zunächst enthaltene Luft durch die Öffnung 28 im gestuften Stempel 4 und in weiterer Folge durch die Manipulatorhülse 9' entweicht. Eine Beschleunigung des erfingungsgemäßen Verfahrens ist durch eine vertikale Auf-Ab-Beweung des Systems 2,4,7,9',29 in Richtung des Doppelpfeiles möglich, wobei durch die Konvektion der durch die Lochreihe 6 aus- bzw. eintretenden Flüssigkeit 31 Konzentrationsgradienten an der Oberfläche der Probe 7 abgebaut werden. Zur Polymerisation wird eine zumindest teilweise mit Monomer-Ansatz 5 gefüllte Hüllkapsel 3 in der strichliert angedeuteten Weise auf die zweite Stufe des Stempels 4 aufgesteckt und das System 2,3,4,5,7,9',29 in einen Thermostaten zur Wärmepolymerisation oder in ein Tieftemperatur-System zur UV-Polymerisation (vgl. hierzu Fig. 2d) überführt. Durch die Handhabung mittels des Manipulators 9',29 wird nach dem initialen Einbringen des Objektes 7 in die Lochkapsel 2 und dem Aufstecken der Lochkapsel 2 auf den gestuften Stempel 4 jede Gefahr eines Hautkontaktes mit einem Allergen, bei der Arbeit unter dem Abzug auch jede Gefahr einer Inhalation giftiger Gase auf einfachste Weise vermieden.

Fig. 1b zeigt die Abmessungen und die relative Lagebeziehung der nach Fig. 1a verwendeten Lochkapsel 2 und Hüllkapsel 3. Beispielsweise weist die Lochkapsel 2 einen Außendurchmesser A bei einer Wandstärke W und einer Höhe H1, die Hüllkapsel 3 einen Außendurchmesser B bei einer Wandstärke W und einer Höhe H2 auf. Der strenge Schiebesitz auf dem gestuften Stempel 4 erstreckt sich jeweils auf einen Höhenabschnitt C. Der Spalt zwischen der Außenfläche der Lochkapsel 2 und der Innenfläche der Hüllkapsel 3 entspricht S. Die Lochreihe 6 befindet sich vorzugsweise etwa in der Hälfte des halbkugelförmigen unteren Abschnittes der Lochkapsel 2, wobei die einzelnen Löcher einen Durchmesser D aufweisen.

Die Außendurchmesser A und B der Kapseln 2 und 3 liegen in der für Blockeinbettungen üblichen Größenordnung zwischen etwa 4 und 10 mm, ihre Wandstärken in einer Größenordnung zwischen 0,1 und 0,5 mm, ihre Höhen H1 und H2 in einer Größenordnung zwischen etwa 8 und 15 mm. Die Höhen C der Stufen auf dem beispielsweise am Träger 9' befestigten gestuften Stempel 4 betragen jeweils etwa 2 bis 4 mm. Der Spalt S zwischen der äußeren Oberfläche der Lochkapsel 2 und der inneren Oberfläche der Hüllkapsel 3 mißt etwa 0,5 bis 2 mm, der Durchmesser der Löcher 6 etwa 0,2 bis 1 mm.

Im Gegensatz zu Fig. 1a ermöglicht die Ausbildung nach Fig. 1c im erfindungsgemäßen Sinn, das Verfahren mit jeweils mindestens zwei Doppelkapseln 2',3 in jeweils einem Arbeitsgang durchzuführen. Abweichend von Fig. 1a und b befinden sich die Lochkapseln 2' hierbei auf einfachen Stempeln 4' ohne Stufen, die auf einem Träger 1 befestigt, beispielsweise aufgeschraubt sind, der Öffnungen 8 zum Durchtritt von UV-Strahlung (vgl. Fig. 2d) aufweist. Die Lochkapseln 2' sitzen am Stempel 4' in strengem Schiebesitz unter den in Fig. 1a erläuterten Bedingungen und weisen im Bereich C selbst einen Bördelrand 27 auf, auf den die Hüllkapseln 3 ebenfalls in einem strengen Schiebesitz aufgebracht werden können. Nach der Darstellung in Fig. 1c sind die Kapseln 2',3 einschließlich des Spaltes S mit Monomer-Ansatz 5 gefüllt und damit zur Polymerisation des Monomers 5 bereit. Der Träger 1 kann hierzu mit einem Manipulator 9 transferiert werden, der mit dem Träger 1 beispielsweise durch eine Verschraubung verbunden sein kann.

Für die Ausführung der Einzelschritte nach dem erfindungsgemäßen Verfahren wie für die Ausbildung der weiteren Bestandteile des erfindungsgemäßen Systems von Vorrichtungen spielen die geometrischen Lagebeziehungen der verschiedenen Teile bzw. nach den Fign. 1 und 2 insbesondere der Abstand D der parallelen Achsen der beiden beispielhaft dargestellten Stempel 4 bzw. 4' die entscheidende Rolle. Fig. 2 zeigt diese weiteren Bestandteile, welche zum Befüllen der Kapseln 2,3 bzw. 2',3 sowie zum Wechsel der verschiedenen sukzessive einzusetzenden Medien (z.B. Aldehyd-Lösung zur ersten Fixation Puffer ohne Aldehyd 0s04-Lösung zur zweiten Fixation Puffer ohne 0s04 Entwässerungsstufen mit 50%, 75%, 90% und 100% Azeton Mischungen 3:1, 1:1 und 1:3 zwischen Azeton und Monomer reines Monomer *bei dem Standard-Verfahren zur Kunststoff-Einbettung* bzw. Substitutionsmedium Waschflüssigkeit Mischungsstufen zwischen Waschflüssigkeit und Monomer-Ansatz reiner Monomer-Ansatz *bei dem Verfahren zur Kryosubstitution* bzw. gepufferte Aldehyd-Lösung zur Fixation Puffer als Waschflüssigkeit Methanol-Wasser-Mischungen mit 50%, 75% und 90% Methanol reines wasserfreies Methanol dreimal gewechselt Mischungen zwischen Methanol und Monomer-Ansatz 3:1, 1:1 und 1:3 reiner Monometer-Ansatz *bei der PLT Methode*) erforderlich sind.

Fig. 2a und b zeigen einen Behälter 10 zum Befüllen und Aufnehmen der Lochkapseln 2 bzw. 2', der im Achsenabstand D voneinander zumindest zwei Bohrungen 11 mit einem Durchmesser (A + T) zum Einstecken der Lochkapseln 2 bzw. 2' aufweist. Der Durchmesser dieser Bohrungen 11 übertrifft den Durchmesser A der Lochkapseln 2 bzw. 2' um den Toleranzbetrag T (etwa 0,5 bis 1 mm), der unter allen bekannten experimentellen Bedingungen ein leichtes Einstecken und eine leichte Entnahme der Lochkapseln 2 bzw. 2' gewährleistet. Die Bohrungen können zum Einsatz von Lochkapseln 2' mit Bördelrand 27 gestuft ausgebildet sein. Zwischen den beiden Bohrungen 11 befindet sich eine größere Öffnung 24 zur Aufnahme eines Verdrängungskörpers 12 mit einer koaxialen Zentralbohrung 13, der einen Ansatz (z.B. Gewindebohrung 14) zur Aufnahme eines Manipulators (z.B. Kryo-Manipulator 9 mit Gewinde) sowie einen Verdrehungsschutz (z.B. Bolzen 15) aufweisen und in der Öffnung 24 auf- und abbewegt werden kann. Der Durchmesser der Öffnung 24, sowie des Verdrängungskörpers 12, sowie der Boden des Verdrängungskörpers 12 sind so ausgebildet, daß die in den vorzugsweise zentral angeordneten Kanal 13 eingefüllten und durch ihn abzuziehenden Medien sich durch einen Spalt S' rasch bewegen können. Der Behälter 10 kann schließlich in weiterer Ausgestaltung der Erfindung mit einem hochgezogenen Rand 16 versehen sein, der ein Überfließen von Medien bei der Auf-Ab-Bewegung des Verdrängungskörpers 12 verhindert.

Als weiteren Bestandteil des erfindungsgemäßen Systems bzw. zum Durchführen des erfindungsgemäßen Verfahrens zeigt Fig. 2c einen Behälter 17 zum Befüllen und Aufnehmen der Hüllkapseln 3 mit dem Träger 1,4 bzw. 1,4', der in seiner Prinzipanordnung dem Behälter 10 weitgehend entspricht. Er weist wiederum zumindest zwei Bohrungen 18 zur Aufnahme der Hüllkapseln 3 auf, deren parallele Achsen sich entsprechend den Achsen der beiden Stempel 4 bzw. 4' auf dem Träger 1 beispielhaft in einem Abstand D voneinander befinden. Der Durchmesser der Bohrungen 18 beträgt im Hinblick auf den größeren Außendurchmesser B der Hüllkapseln in diesem Fall (B + T), wobei T wiederum als Toleranzbetrag in dem bereits erläuterten Sinn zu verstehen ist. Zwischen den beiden Bohrungen 18 befindet sich wiederum eine zentrale Bohrung 26, deren Volum zumindest dem Volum aller Bohrungen 18 zur Aufnahme der Hüllkapseln 3 entspricht. Analog zum Behälter 10 ist der Rand 19 des Behälters 17 zum Schutz gegen ein seitliches Abfließen des überschüssigen Monomer-Ansatzes beim Eintauchen der Lochkapseln 2 oder 2' zum Aufstecken der Hüllkapseln 3 hochgezogen.

Zum Zweck der verfahrensmäßigen Durchführung der Tieftemperatur-Polymerisation durch UV-Strahlung verfügt die erfindungsgemäße Anordnung nach Fig. 2d weiters über einen Topf 20 mit einem zentralen Ständer 21, auf den der mit den Kapseln 2,3 bzw. 2',3 beschickte Träger 1,4 bzw. 1,4' aufgelegt oder aufgesteckt werden kann. Die Innenwandungen des Topfes 20 reflektieren das von oben von einem UV-Strahler eintretende UV dergestalt, daß die UV-Einwirkung im Kapselsystem 2,3 bzw. 2',3 vor allem von unten erfolgt und daher zunächst das Monomer 5 im Bereich der Objekte 7 polymerisiert. Dies ist aus methodischen Gründen wichtig (vgl. zitierte Literatur). Zum Abführen der Wärme, die bei der exothermen Polymerisations-Reaktion entsteht, wird der Topf 20 etwa bis zur unteren Begrenzung der Stempel 4, höchstens aber bis zum oberen Rand der Hüllkapseln 3 mit einer Flüssigkeit 22 (z.B. Alkohol) gefüllt.

Die Durchführung des erfindungsgemäßen Verfahrens ist mit Hilfe des erfindungsgemäßen Systems denkbar einfach. Im einfachsten Fall wird eine mit einem Präparat 7 bestückte Lochkapsel 2 oder 2' auf den Stempel 4 oder 4' mit einer Pinzette oder mit einem einfachen Manipulator, der im wesentlichen aus einer Hülse 9' mit einem Handgriff 29 besteht, in das erste Medium (z.B. Aldehyd-Lösung oder Substitutionsmedium 31 im Behälter 30) eingetaucht. Zum Erzeugen einer Konvektion bzw. zum Abbau von Gradienten an der Objektoberfläche genügt ein kurzes Anheben und Wiederabsenken der Kapsel 2 bzw. 2'. Nach vollzogener Inkubation wird die Kapsel 2 oder 2' angehoben und nach Auslaufen des Mediums in das nächste Medium übertragen. Nach vollzogener Inkubation im Monomer-Ansatz 5 wird die Lochkapsel 2 oder 2' nach Fig. 1 mit einer Hüllkapsel 3 versehen und der Wärme- oder UV-Polymerisation zugeführt.

Nach einer Ausgestaltung der Erfindung werden die leeren Lochkapseln 2 oder 2' in die Öffnungen 11 eines Behälters 10 eingesteckt und mit ihm im Falle einer Kryopräparation auf die gewünschte Temperatur (z.B. -80°C) in einem Kühlsystem abgekühlt. Nach Einlegen der gegebenenfalls gefrorenen Objekte 7 wird in die zentrale Öffnung 24 des Behälters 10 die zum Befüllen der Lochkapseln 2 oder 2' befindliche oder eingefüllte Menge des flüssigen Mediums durch den bedarfsweise ebenfalls vorgekühlten Verdrängungskörper 12 langsam angehoben: Die Kapseln 2 oder 2' füllen sich nun durch die Bohrungen 6 mit dem kalten Medium, das durch den Zentralkanal 13 des Verdrängungskörpers wieder abgesaugt und gegen ein neues Medium ausgetauscht werden kann. Während der Inkubation ist eine synchrone Bewegung der Flüssigkeit in den Kapseln 2 bzw. 2' durch einfaches Anheben oder Absenken des Verdrängungskörpers 12 möglich. Nach mermaligem Medienwechsel befindet sich in allen Kapseln reiner Monomer-Ansatz 5. Alle Kapseln 2 oder 2' werden nun auf die am Träger 1 befindlichen Stempel 4 oder 4' aufgesteckt und an diesem transferiert. Vorher werden die Hüllkapseln 3 in den Öffnungen 18 des Behälters 17 ebenfalls mit kaltem Monomer 5 gefüllt und darauf die gefüllten Lochkapseln 2 oder 2' mit dem Träger 1,4 oder 1,4' zum Abdichten der Öffnungen 6 in die Hüllkapseln 3 eingesteckt. Die Hüllkapseln 3 haften im strengen Schiebesitz entweder auf der zweiten Stufe eines gestuften Stempels 4 oder am Bördelrand 27 der Lochkapsel 2', die sich ihrerseits im strengen Schiebesitz auf einem Stempel 4' befindet. Das überschüssige Monomer fließt aus den Hüllkapseln 3 in die zentrale Öffnung 26 des Behälters 17 ab. Der beschickte Träger 1,4,2,3 bzw. 1,4',2',3 wird mit dem Manipulator 9 nunmehr auf den Ständer 21 im Topf 20 übertragen und die UV-Polymerisation in der bereits beschriebenen Weise nach Fig. 2d vollzogen. Für eine nachfolgende Wärmepolymerisation wird das System mit dem Manipulator 9 in einen Thermostaten übertragen.

Das erfindungsgemäße Verfahren kann in verschiedenen Modifikationen und Kombinationen der an Hand der Figuren 1 und 2 beispielhaft erläuterten Anordnung verwirklicht werden, ohne seinen Erfindungscharakter dadurch einzubüßen. So kann und wird man insbesondere in der Praxis statt zwei Doppelkapseln 2,3 bzw. 2',3 in einem Arbeitsgang wesentlich mehr Kapseln beschicken, wie dies in Fig. 2a durch die strichlierten Öffnungen 11' beispielhaft angedeutet ist. Unerheblich ist die geometrische Form der Kapseln bzw. die geometrische Anordnung der Kapseln am Träger 1 oder in den Behältern 10 und 17. Unerheblich ist ferner, aus welchen Materialien (z.B. PE, PP, Azetalharz, Gelatine bzw. Aluminium, Edelstahl) und nach welchen Methoden (z.B. Replikation, Spritzguß) die Kapseln bzw. die Behälter und sonstigen Teile der Anordnung hergestellt werden. Schließlich besteht ein wesentlicher Vorteil der erfindungsgemäßen Doppelkapsel-Anordnung verfahrensmäßig darin, daß dieses Prinzip bzw. System mit jedem technisch bekannten Verfahren bzw. System zum automatischen Processing von biologischen Proben für eine nachfolgende Schnittpräparation oder histochemische sowie biochemische Untersuchung eingesetzt werden kann, wobei lediglich der erste Schritt (Beschicken der Lochkapseln 2 oder 2' mit Proben 7) manuell vollzogen werden muß, bei allen anderen Schritten aber ein automatischer Ablauf ohne Eingriff des Benutzers und dabei auch ohne das Risiko von Hautkontakten mit Allergenen bzw. Inhalationen von gasförmigen Giftstoffen, sowie ohne zusätzlichen Zeitaufwand vollzogen werden kann.

## Patentansprüche

1. Verfahren zur Inkubation von Proben in Flüssigkeiten für eine nachfolgende Polymerisations-Einbettung in Kapseln, bei dem die Proben (7) in oben offene Kapseln (2,2') gegeben werden, welche im unteren Drittel ihrer Wand mindestens eine Durchtrittsöffnung (6) aufweisen, wobei die Durchtrittsöffnung kleiner ist als der Durchmesser der Proben (7) und über diese Durchtrittsöffnung (6) zumindest eine Flüssigkeit (31,5) eingefüllt wird und die Proben (7) jeweils darin inkubiert werden, die Lochkapseln (2,2') zur Polymerisation anschließend in Hüllkapseln größeren Durchmessers (3) eingeführt werden, wobei eine in den Hüllkapseln (3) befindliche Flüssigkeit (5) zumindest den Spalt (S) zwischen der Lochkapsel (2,2') und der Hüllkapsel (3) füllt.

2. Verfahren nach Anspruch 1, dadurch gekennzeichnet, daß die Proben (7) gefroren sind und das Verfahren bei reduzierter Temperatur ausgeführt wird.

3. Verfahren nach Anspruch 1 oder 2, dadurch gekennzeichnet, daß zumindest eine Flüssigkeit (5) organisch ist.

4. Verfahren nach einem der Ansprüche 1 bis 3, dadurch gekennzeichnet, daß die Hüllkapseln (3) samt Flüssigkeit (31,5) und den darin angeordneten Lochkapseln (2,2') mit Proben (7) angehoben und einem weiteren Bearbeitungsschritt zugeführt werden.

5. Verfahren nach Anspruch 4, dadurch gekennzeichnet, daß die Flüssigkeit (5) unter UV-Lichteinwirkung polymerisierbar bzw. aushärtbar ist und der weitere Behandlungsschritt in einer UV-Bestrahlung (UV) besteht.

6. Verfahren nach Anspruch 5, dadurch gekennzeichnet, daß das UV-Licht (UV) zum Großteil von unten auf die UV-durchlässigen Hüllkapseln (3) und Lochkapseln (2, 2') auftrifft.

7. Verfahren nach Anspruch 5 oder Anspruch 6, dadurch gekennzeichnet, daß zwecks besserer Wärmeabfuhr die UV-Bestrahlung (UV) erfolgt, während die Hüllkapseln (3) in ein Flüssigkeitsbad (20, 22) eingetaucht sind, wobei die Wände des Flüssigkeitsbades (20) UV-reflektierend sind.

8. Verfahren nach Anspruch 4, dadurch gekennzeichnet, daß die in den Kapseln befindliche Flüssigkeit (5) unter Wärmeeinwirkung aushärtbar bzw. polymerisierbar ist und der weitere Behandlungsschritt in einer Wärmezufuhr besteht.

9. Verfahren nach einem der Ansprüche 1 bis 8, dadurch gekennzeichnet, daß mehrere gleichartige Lochkapseln (2, 2') gemeinsam mit zumindest einer Flüssigkeit (31,5) gefüllt werden bzw. daß diese Flüssigkeit gemeinsam aus den Lochkapseln (2, 2') abgezogen wird, sowie daß diese Lochkapseln (2, 2') mittels eines Halters (1, 4, 4'), der gleichzeitig an allen Lochkapseln (2, 2') angreift und diese oben haltert, gemeinsam zu den Hüllkapseln (3) transferiert und daß die Lochkapseln (2, 2') mittels dieses Halters (1, 4, 4') in die Hüllkapseln (3) eingeführt werden und die Lochkapseln (2, 2') zusammen mit diesen Hüllkapseln (3) gemeinsam einem weiteren Bearbeitungsschritt zuführbar sind.

10. Vorrichtung zur Durchführung des Verfahrens nach einem der Ansprüche 1 bis 9, in der oben offene Kapseln (2,2'), welche in unteren Drittel ihrer Wand mindestens eine Durchtrittsöffnung aufweisen, Hüllkapseln größeren Durchmessers, in die die Lochkapseln (2,2') eingeführt werden können, sowie ein Halter (1) mit mindestens einem daran angeordneten Stempel (4, 4') zum Halten und Transport der mindestens einen Lochkapsel (2, 2') und der die Lochkapsel (2,2') einschließenden Hüllkapsel (3) vorgesehen sind, wobei sowohl die Lochkapsel (2, 2') als auch die Hüllkapsel (3) eine zylindrische Wand aufweisen, und die Lochkapsel (2,2') allein oder zusammen mit der Hüllkapsel (3) über den gemeinsamen Halter (1) in verschiedene, mit jeweils einer Flüssigkeit (31,5,22) gefüllte Behälter (10,17,20,30) zur Inkubation und nachfolgenden Polymerisations-Einbettung der der Probe (7) einbringbar ist.

11. Vorrichtung nach Anspruch 10, dadurch gekennzeichnet, daß die Lochkapsel (2, 2') im Bereich des oberen Randes einen über die zylindrische Wand vorstehenden Erweiterungsring (27) aufweist.

12. Vorrichtung nach Anspruch 11, dadurch gekennzeichnet, daß der Erweiterungsring (27) einstückig mit der zylindischen Wand ausgebildet ist.

13. Vorrichtung nach einem der Ansprüche 10 bis 12, dadurch gekennzeichnet, daß die Hüllkapsel (3) und/oder die Lochkapsel (2, 2') aus einem UV-durchlässigen Kunststoff besteht.

14. Vorrichtung nach Anspruch 10, dadurch gekennzeichnet, daß der Behälter (10) mindestens eine Öffnung (24) zur Aufnahme der Flüssigkeit (5) und mindestens eine Öffnung (11) zur Aufnahme einer Lochkapsel (2) aufweist, wobei die Flüssigkeit (5) bis unterhalb der Durchtrittsöffnung(en) der in die Öffnung(en) (11) eingesetzten Lochkapsel(n) (2, 2') reicht und daß die Öffnung(en) (24) mit der (den) Öffnung(en) (11) für die Lochkapsel(n) (2, 2') kommuniziert (kommunizieren).

15. Vorrichtung nach Anspruch 14, dadurch gekennzeichnet, daß in der zylindrischen Öffnung (24) ein ebenfalls zylindrischer Verdrängungskörper (12) vertikal verschiebbar angeordnet ist.

16. Vorrichtung nach Anspruch 15, dadurch gekennzeichnet, daß der Verdrängkörper (12) von einem durchgehenden Nachfüllkanal (13) mit einem Durchmesser von etwa 7 mm durchsetzt ist und zu den Wandungen der Öffnung (24) ein Abstand (S') besteht, der einen Durchtritt von Flüssigkeit erlaubt.

17. Vorrichtung nach Anspruch 15 oder 16, dadurch gekennzeichnet, daß der Behälter (10) einen hochgezogenen Rand (16) aufweist, so daß das beim Absenken des Verdrängkörpers (12, 13) aus der Öffnung (24) verdrängte Flüssigkeitsvolumen von dem Behälter (10) aufgenommen werden kann.

18. Vorrichtung nach einem der Ansprüche 14 bis 17, dadurch gekennzeichnet, daß die Öffnung (24) zentral angeordnet ist, und zwei oder mehrere Öffnungen (11) zur Aufnahme von Lochkapseln (2, 2') entlang einer zur Öffnung (24) konzentrischen Kreislinie angeordnet sind.

19. Vorrichtung nach einem der Ansprüche 14 bis 18, dadurch gekennzeichnet, daß die zylindrischen Öffnungen (11) für die Lochkapseln (2, 2') zueinander parallel ausgerichtet sind.

20. Vorrichtung nach mindestens einem der vorherigen Ansprüche, dadurch gekennzeichnet, daR der Behälter (17) eine zentrale Öffnung (26) mit einem Volumen aufweist, das dem Volumen aller Öffnungen (18) zur Aufnahme der Hüllkapseln (3) entspricht oder dieses übertrifft, und daß der Behälter (17) einen über den Rand der einzelnen Öffnungen (18) für die Hüllkapseln (3) hochgezogenen Außenrand (19) aufweist, der ein Abfließen von Flüssigkeit aus den gefüllten Hüllkapseln (3) beim Einstecken der Lochkapseln (2, 2') nach außen verhindert und die verdrängte Flüssigkeit (5) in die zentrale Öffnung (26) lenkt.

21. Vorrichtung nach Anspruch 10, dadurch gekennzeichnet, daß der Haller (1) mehrere aus einer Ebene hervortretende Stempel (4, 4') aufweist, die in strengem Schiebesitz in die Lochkapseln (2, 2') und/oder Hüllkapseln (3) einschiebbar sind und diese oben verschließt.

22. Vorrichtung nach Anspruch 10, dadurch gekennzeichnet, daß die Stempel (4) gestuft ausgebildet sind, wobei der untere Abschnitt mit dem geringeren Durchmesser (A-2W) eine Passung dergestalt aufweist, daß die Lochkapseln (2) in einem strengen Schiebesitz auf diesen Abschnitt aufgesteckt werden, und daß der größere Durchmesser (B-2W) mit Hüllkapseln (3) größeren Durchmessers dergestalt korrespondiert, daß diese Hüllkapseln (3) auf den zweiten Abschnitt der gestuften Stempel (4) ebenfalls in strengem Schiebesitz aufgesteckt werden.

23. Vorrichtung nach Anspruch 21 oder 22, dadurch gekennzeichnet, daß mit dem Halter (1, 4') ein thermisch isolierender Manipulator (9) fest verbunden ist.

24. Vorrichtung nach einem der Ansprüche 21 bis 23, dadurch gekennzeichnet, daß der Halter (1, 4') zwischen den Ansätzen der Stempel (4, 4') und dem Ansatz für den Manipulator (9) Öffnungen (8) zum Durchtritt von UV-Strahlen aufweist.

25. Vorrichtung nach einem der Ansprüche 21 bis 24, dadurch gekennzeichnet, daß die gestuften (4) oder einfachen (4') Stempel eine vorzugsweise koaxiale zentrale Öffnung (28) aufweisen.

26. Vorrichtung nach mindestens einem der Ansprüche 21 bis 25, dadurch gekennzeichnet, daß der Flüssigkeitsbad-Behälter (20) mit einer Aufnahme für den Halter (1) vorgesehen ist.

27. Vorrichtung nach Anspruch 26, dadurch gekennzeichnet, daß die Behälter-Innenwände des Flüssigkeitsbehälters (20) UV-reflektierend ausgebildet sind.

28. Vorrichtung nach Anspruch 26 oder 27, dadurch gekennzeichnet, daß der Flüssigkeitsbad-Behälter (20) als topfartiger Behälter (20) mit einem zentralen Ständer (21) zum Auflegen oder Aufstecken des mit gefüllten Lochkapseln (2, 2', 5, 7) und Hüllkapseln (3, 5) beschickten Trägers (1, 4, 4') ausgebildet ist.

29. Vorrichtung nach mindestens einem der vorherigen Ansprüche, dadurch gekennzeichnet, daß die Lochkapseln (2, 2') und Hüllkapseln (3) so dimensioniert sind, daß zwischen dem Außendurchmesser (A) der Lochkapseln (2, 2') und dem Innendurchmesser (B-2W) der Hüllkapseln (3) ein Spalt (S) von mindestens 0,1 mm bis 2 mm vorhanden ist.

30. Vorrichtung nach Anspruch 29, dadurch gekennzeichnet, daß mehrere Lochkapseln (2, 2') und Hüllkapseln (3) vorgesehen sind, und daß die Öffnungen (11, 18) in den Behältern (10, 17) zur Aufnahme der Lochkapseln (2, 2') und zur Aufnahme der Hüllkapseln (3), und daß die Stempel (4, 4') zum Aufstecken der Lochkapseln (2, 2') und Hüllkapseln (3) am Halter (1, 4, 4') im jeweils in gleichen Abständen entlang einer Kreislinie oder im gleichen Abstand (D/2) von der Mittelachse der einzelnen Systemteile (10, 17, 1,4,4') angeordnet sind.

31. Vorrichtung nach Anspruch 29 oder 30, dadurch gekennzeichnet, daß eine durch einen Motor, eine Hydraulik, einen Hub- oder Schubmagneten betriebene oder eine sonstige automatisch arbeitende Vorrichtung den Transfer der mit Objekten (7) beschickten Lochkapseln (2, 2') von einem Medium (31) in das nachfolgende und/oder das Aufstecken der Hüllkapseln (3) auf die mit den Lochkapseln (2, 2') beschickten Stempel (4, 4') für die nachfolgende UV-Polymerisation (20,21,22) oder Wärmepolymerisation vollzieht.

## Claims

1. A method for incubating samples in liquids for a subsequent polymerization embedding in capsules, in which the samples (7) are placed into capsules (2, 2') open at the top, that have in the lower third of their wall at least one passthrough opening (6), the passthrough opening being smaller than the diameter of the samples (7); and at least one liquid (31, 5) being introduced through this passthrough opening (6) and the samples (7) being respectively incubated therein; the perforated capsules (2, 2') subsequently being introduced, for polymerization, into larger-diameter sheath capsules (3), a liquid (5) present in the sheath capsules (3) filling at least the gap (S) between the perforated capsule (2, 2') and the sheath capsule (3).

2. The method as defined in Claim 1, wherein the samples (7) are frozen and the method is performed at reduced temperature.

3. The method as defined in Claim 1 or 2, wherein at least one liquid (5) is organic.

4. The method as defined in one of Claims 1 through 3, wherein the sheath capsules (3) plus liquid (31, 5) and the perforated capsules (2, 2') with samples (7) arranged therein are lifted up and conveyed to a further processing step.

5. The method as defined in Claim 4, wherein the liquid (5) can be polymerized or cured by the application of UV light, and the further treatment step comprises UV irradiation (UV).

6. The method as defined in Claim 5, wherein the UV light (UV) strikes the UV-transparent sheath capsules (3) and perforated capsules (2, 2') predominantly from below.

7. The method as defined in Claim 5 or Claim 6, wherein for the purpose of better heat dissipation, the UV irradiation (UV) takes place while the sheath capsules (3) are immersed in a liquid bath (20, 22), the walls of the liquid bath (20) being UV-reflective.

8. The method as defined in Claim 4, wherein the liquid (5) present in the capsules can be cured or polymerized by the application of heat, and the further treatment step comprises delivery of heat.

9. The method as defined in one of Claims 1 through 8, wherein multiple identical perforated capsules (2, 2') are jointly filled with at least one liquid (31, 5) and said liquid is jointly withdrawn from the perforated capsules (2, 2'); and said perforated capsules (2, 2') are jointly transferred to the sheath capsules (3) by way of a holder (1, 4, 4') that engages simultaneously on all the perforated capsules (2, 2') and holds them at the top; and the perforated capsules (2, 2') are introduced by way of this holder (1, 4, 4') into the sheath capsules (3), and the perforated capsules (2, 2'), together with said sheath capsules (3), can be jointly conveyed to a further processing step.

10. An apparatus for carrying out the method as defined in one of Claims 1 through 9, in which capsules (2, 2') that are open at the top and have in the lower third of their wall at least one passthrough opening, larger-diameter sheath capsules (3) into which the perforated capsules (2, 2') can be introduced, and a holder (1) having at least one plunger (4, 4') for holding and transporting the at least one perforated capsule (2, 2') and the sheath capsule (3) enclosing the perforated capsule (2, 2'), are provided; both the perforated capsule (2, 2') and the sheath capsule (3) having a cylindrical wall, and the perforated capsule (2, 2'), alone or together with the sheath capsule (3), being insertable via the common holder (1) into various containers (10, 17, 20, 30) each filled with a liquid (31, 5, 22) for incubation and subsequent polymerization embedding of the sample (7).

11. The apparatus as defined in Claim 10, wherein the perforated capsule (2, 2') has, in the region of the upper rim, an enlarging ring (27) projecting beyond the cylindrical wall.

12. The apparatus as defined in Claim 11, wherein the enlarging ring (27) is configured integrally with the cylindrical wall.

13. The apparatus as defined in one of Claims 10 through 12, wherein the sheath capsule (3) and/or the perforated capsule (2, 2') is made of a UV-transparent plastic.

14. The apparatus as defined in Claim 10, wherein the container (10) has at least one opening (24) for receiving the liquid (5) and at least one opening (11) for receiving a perforated capsule (2), the liquid (5) extending to a point below the passthrough opening(s) in the perforated capsules(s) (2, 2') inserted into the opening(s) (11); and the opening(s) (24) communicating with the opening(s) 11 for the perforated capsule(s) (2, 2').

15. The apparatus as defined in Claim 14, wherein a displacement element (12) that is also cylindrical is arranged in vertically movable fashion in the cylindrical opening (24).

16. The apparatus as defined in Claim 15, wherein the displacement element (12) is penetrated by a continuous refilling conduit (13) having a diameter of approximately 7 mm, and there exists from the walls of the opening (24) a spacing (S') that allows the passage of liquid.

17. The apparatus as defined in Claim 15 or 16, wherein the container (10) has an elevated rim (16) so that the liquid volume displaced from the container (10) out of the opening (24) upon lowering of the displacement element (12, 13) can be received.

18. The apparatus as defined in one of Claims 14 through 17, wherein the opening (24) is arranged centrally, and two or more openings (11) for receiving perforated capsules (2, 2') are arranged along a circular line concentric with the opening (24).

19. The apparatus as defined in one of Claims 14 through 18, wherein the cylindrical openings (11) for the perforated capsules (2, 2') are aligned parallel to one another.

20. The apparatus as defined in at least one of the foregoing claims, wherein the container (17) has a central opening (26) having a volume that corresponds to or exceeds the volume of all the openings (18) for receiving the sheath capsules (3); and the container (17) has an outer rim (19), elevated above the rims of the individual openings (18) for the sheath capsules (3), that prevents liquid from flowing out of the filled sheath capsules (3) upon insertion of the perforated capsules (2, 2'), and directs the displaced liquid (5) into the central opening (26).

21. The apparatus as defined in Claim 10, wherein the container (1) has several plungers (4, 4'), protruding from one plane, that are insertable with a tight sliding fit into the perforated capsules (2, 2') and/or sheath capsules (3), and close off the latter at the top.

22. The apparatus as defined in Claim 10, wherein the plungers (4) are of stepped configuration, the lower segment with the smaller diameter (A-2W) having a fit such that the perforated capsules (2) are slipped with a tight sliding fit onto this segment; and the larger diameter (B-2W) corresponds to larger-diameter sheath capsules (3) in such a way that said sheath capsules (3) are slipped, also with a tight sliding fit, onto the second segment of the stepped plunger (4).

23. The apparatus as defined in Claim 21 or 22, wherein a thermal insulating manipulator is immovably joined to the holder (1, 4').

24. The apparatus as defined in one of Claims 21 through 23, wherein the holder (1, 4') has, between the extensions of the plungers (4, 4') and the extension for the manipulator (9), openings (8) for the passage of UV radiation.

25. The apparatus as defined in one of Claims 21 through 24, wherein the stepped (4) or simple (4') plunger has a preferably coaxial central opening (28).

26. The apparatus as defined in at least one of Claims 21 through 25, wherein the liquid bath container (20) is provided with a receptacle for the holder (1).

27. The apparatus as defined in Claim 26, wherein the inner walls of the liquid container (20) are of UV-reflective configuration.

28. The apparatus as defined in claim 26 or 27, wherein the liquid bath container (20) is configured as a cup-like container (20) having a central upright (21) for placing or slipping on the carrier (1, 4, 4') loaded with filled perforated capsules (2, 2', 5, 7) and sheath capsules (3, 5).

29. The apparatus as defined in at least one of the foregoing claims, wherein the perforated capsules (2, 2') and sheath capsules (3) are dimensioned such that a gap (S) of at least 0.1 mm to 2 mm is present between the outside diameter (A) of the perforated capsules (2, 2') and the inside diameter (B-2W) of the sheath capsules (3).

30. The apparatus as defined in Claim 29, wherein several perforated capsules (2, 2') and sheath capsules (3) are provided; and the openings (11, 18) in the containers (10, 17) for receiving the perforated capsules (2, 2') and for receiving the sheath capsules (3), and the plungers (4, 4') for slipping the perforated capsules (2, 2') and sheath capsules (3) onto the holder (1, 4, 4'), are respectively arranged at equal spacings along a circular line or at the same spacing (D/2) from the center axis of the individual system parts (10, 17, 1, 4, 4').

31. The apparatus as defined in Claim 29 or 30, wherein an apparatus that is driven by a motor, a hydraulic system, or a lifting or pushing magnet, or that otherwise operates automatically, transfers the perforated capsules (2, 2'), loaded with objects (7), from one medium (31) into the next, and/or slips the sheath capsules (3) onto the plungers (4, 4'), loaded with the perforated capsules (2, 2'), for the subsequent UV polymerization (20, 21, 22) or thermal polymerization.

## Revendications

1. Procédé d'incubation d'échantillons dans des liquides en vue d'une encapsulation par polymérisation, caractérisé en ce que les échantillons (7) sont placés dans des capsules (2, 2') ouvertes en haut et présentant dans le tiers inférieur de leur paroi au moins une ouverture de passage (6) dont le diamètre est inférieur à celui des échantillons (7) et par laquelle est introduit au moins un liquide (31, 5) dans lequel sont incubés les échantillons (7), les capsules percées (2, 2') étant ensuite introduites en vue de la polymérisation dans des capsules enveloppes de diamètre supérieur (3) contenant un liquide (5) qui remplit au moins l'interstice (S) entre la capsule percée (2, 2') et la capsule enveloppe (3).

2. Procédé suivant la revendication 1, caractérisé en ce que les échantillons (7) sont congelés et que le procédé est mis en oeuvre à température réduite.

3. Procédé suivant la revendication 1 ou 2, caractérisé en ce qu'au moins un liquide (5) est organique.

4. Procédé suivant l'une des revendications 1 à 3, caractérisé en ce que les capsules enveloppes (3) accompagnées du liquide (31, 5) et des capsules percées (2, 2') qui y sont disposées et qui contiennent les échantillons (7) sont soulevées et acheminées à une opération suivante de traitement.

5. Procédé suivant la revendication 4, caractérisé en ce que le liquide (5) est polymérisable ou durcissable sous l'action d'une lumière ultraviolette et que l'opération suivante de traitement consiste en une irradiation aux ultraviolets (UV).

6. Procédé suivant la revendication 5, caractérisé en ce que la lumière ultraviolette (UV) irradie en grande partie par le bas les capsules enveloppes (3) et capsules percées (2, 2') perméables aux ultraviolets.

7. Procédé suivant la revendication 5 ou 6, caractérisé en ce que pour améliorer l'évacuation de la chaleur, l'irradiation aux ultraviolets (UV) s'opère alors que les capsules enveloppes (3) plongent dans un bain de liquide (20, 22) dont les parois réfléchissent les ultraviolets.

8. Procédé suivant l'a revendication 4, caractérisé en ce que le liquide (5) se trouvant dans les capsules est durcissable ou polymérisable sous l'action de la chaleur et que l'opération suivante de traitement consiste en un apport de chaleur.

9. Procédé suivant l'une des revendications 1 à 8, caractérisé en ce que plusieurs capsules percées du même type (2, 2') sont remplies ensemble d'au moins un liquide (31, 5) et vidées ensemble de ce liquide, que ces capsules percées (2, 2') sont transférées ensemble aux capsules enveloppes (3) au moyen d'un support (1, 4, 4') prenant toutes les capsules percées (2, 2') en même temps et les maintenant à leur partie supérieure, que les capsules percées (2, 2') sont introduites au moyen de ce support (1, 4, 4') dans les capsules enveloppes (3) et que l'ensemble des capsules percées (2, 2') et de ces capsules enveloppes (3) est acheminable à une opération suivante de traitement.

10. Dispositif de mise en oeuvre du procédé suivant l'une des revendications 1 à 9, caractérisé en ce que sont prévus des capsules (2, 2') ouvertes en haut et présentant dans le tiers inférieur de leur paroi au moins une ouverture de passage, des capsules enveloppes (3) de diamètre supérieur dans lesquelles peuvent être introduites les capsules percées (2, 2'), ainsi qu'un support (1) sur lequel est disposé au moins un tampon (4, 4') destiné au maintien et au transport d'au moins une capsule percée (2, 2') et de la capsule enveloppe (3) qui l'entoure, la capsule percée (2, 2') de même que la capsule enveloppe (3) présentant une paroi cylindrique, et la capsule percée (2, 2') pouvant être introduite, seule ou en même temps que la capsule enveloppe (3), par l'intermédiaire du support commun (1), dans différents récipitents (10, 17, 20, 30) remplis chacun d'un liquide (31, 5, 22) en vue de l'incubation puis de l'encapsulation par polymérisation de l'échantillon (7).

11. Dispositif suivant la revendication 10, caractérisé en ce que la capsule percée (2, 2') présente au niveau du bord supérieur une bague d'extension (27) en saillie par rapport à la paroi cylindrique.

12. Dispositif suivant la revendication 11, caractérisé en ce que la bague d'extension (27) est d'un seul tenant avec la paroi cylindrique.

13. Dispositif suivant l'une des revendications 10 à 12, caractérisé en ce que la capsule enveloppe (3) et/ou la capsule percée (2, 2') se compose de matière plastique perméable aux ultraviolets.

14. Dispositif suivant la revendication 10, caractérisé en ce que le récipient (10) présente au moins une ouverture (24) destinée à recevoir le liquide (5) et au moins une ouverture (11) destinée à recevoir une capsule percée (2), le liquide (5) parvenant jusqu'au-dessous de la ou des ouvertures de passage de la ou des capsules percées (2, 2') introduites dans la ou les ouvertures (11) et que la ou les ouvertures (24) communiquent avec la ou les ouvertures (11) destinées à la ou aux capsules percées (2,2').

15. Dispositif suivant la revendication 14, caractérisé en ce que dans l'ouverture cylindrique (24) est disposé un corps de refoulement également cylindrique (12) pouvant coulisser verticalement.

16. Dispositif suivant la revendication 15, caractérisé en ce que le corps de refoulement (12) est traversé par un canal d'appoint (13) d'environ 7 mm de diamètre et qu'il existe par rapport aux parois de l'ouverture (24) un interstice (S') permettant le passage d'un liquide.

17. Dispositif suivant la revendication 15 ou 16, caractérisé en ce que le récipient (10) présente un bord relevé (16), de sorte que lors de la descente du corps de refoulement (12, 13), le volume de liquide refoulé de l'ouverture (24) puisse être reçu dans le récipient (10).

18. Dispositif suivant l'une des revendications 14 à 17, caractérisé en ce que l'ouverture (24) est centrale et que deux ouvertures (11) ou plus destinées à recevoir des capsules percées (2, 2') sont disposées le long d'un cercle concentrique à l'ouverture (24).

19. Dispositif suivant l'une des revendications 14 à 18, caractérisé en ce que les ouvertures cylindriques (11) destinées à recevoir les capsules percées (2, 2') sont orientées parallèlement les unes aux autres.

20. Dispositif suivant l'une au moins des revendications précédentes, caractérisé en ce que le récipient (17) présente une ouverture centrale (26) de volume correspondant ou supérieur au volume de toutes les ouvertures (18) destinées à recevoir les capsules enveloppes (3) et que le récipient (17) présente un bord extérieur (19) relevé au-delà du bord des différentes ouvertures (18) destinées à recevoir les capsules enveloppes (3) afin d'empêcher que le liquide ne s'échappe des capsules enveloppes remplies (3) lors de l'introduction des capsules percées (2, 2') et de guider le liquide refoulé (5) vers l'ouverture centrale (26).

21. Dispositif suivant la revendication 10, caractérisé en ce que le support (1) présente en saillie par rapport à un plan plusieurs tampons (4, 4') pouvant être emmanchés avec ajustement glissant serré dans les capsules percées (2, 2') et/ou les capsules enveloppes (3) et les obturant à leur partie supérieure.

22. Dispositif suivant la revendication 10, caractérisé en ce que les tampons (4) sont étagés, la partie inférieure de faible diamètre (A-2W) présentant un ajustement tel que les capsules percées (2) soient emmanchées avec ajustement glissant serré sur cette partie, et le plus grand diamètre (B-2W) correspondant à des capsules enveloppes (3) de plus grand diamètre de telle manière que ces capsules enveloppes (3) soient également emmanchées avec ajustement glissant serré sur la seconde partie des tampons étagés (4).

23. Dispositif suivant la revendication 21 ou 22, caractérisé en ce qu'un manipulateur thermiquement isolé (9) est solidaire du support (1, 4').

24. Dispositif suivant l'une des revendications 21 à 23, caractérisé en ce que le support (1, 4') présente entre les épaulements des tampons (4, 4') et l'épaulement destiné au manipulateur (9) des ouvertures (8) destinées au passage des rayons UV.

25. Dispositif suivant l'une des revendications 21 à 24, caractérisé en ce que les tampons étagés (4) ou simples (4') présentent une ouverture centrale (28) de préférence coaxiale.

26. Dispositif suivant l'une au moins des revendications 21 à 25, caractérisé en ce que le récipient du bain de liquide (20) est doté d'un réceptacle pour le support (1).

27. Dispositif suivant la revendication 26, caractérisé en ce que l'intérieur des parois du récipient de liquide (20) réfléchissent les ultraviolets.

28. Dispositif suivant la revendication 26 ou 27, caractérisé en ce que le récipient du bain de liquide (20) est en forme de pot (20) et comporte un montant central (21) permettant de poser ou d'emmancher le support (1, 4, 4') doté des capsules percées (2, 2', 5, 7) et capsules enveloppes (3, 5) remplies.

29. Dispositif suivant l'une au moins des revendications précédentes, caractérisé en ce que les capsules percées (2, 2'' et capsules enveloppes (3) sont dimensionnées de telle manière qu'entre le diamètre extérieur (A) des capsules percées (2, 2') et le diamètre intérieur (B-2W) des capsules enveloppes (3) existe un interstice (S) d'au moins 0,1 mm à 2 mm.

30. Dispositif suivant la revendication 29, caractérisé en ce qu'il est prévu plusieurs capsules percées (2, 2') et capsules enveloppes (3) et que les ouvertures (11, 18) prévues dans les récipients (10, 17) pour recevoir les capsules percées (2, 2') et les capsules enveloppes (3) ainsi que les tampons (4, 4') prévus pour l'emmanchement des capsules percées (2, 2') et capsules enveloppes (3) sur le support (1, 4, 4') sont respectivement disposés à distances égales le long d'un cercle ou à la même distance (D/2) de l'axe des différents éléments du système (10, 17, 1, 4, 4').

31. Dispositif suivant la revendication 29 ou 30, caractérisé en ce qu'un dispositif entraîné par un moteur, un système hydraulique ou un électro-aimant de levage ou de poussée ou un autre dispositif à fonctionnement automatique assure le transfert des capsules percées (2, 2') contenant les échantillons (7) d'un fluide (31) au suivant et/ou l'emmanchement des capsules enveloppes (3) sur les tampons (4, 4') dotés des capsules percées (2,2') en vue de la polymérisation qui suit aux ultraviolets (20, 21, 22) ou à la chaleur.
